# EUROPÄISCHE PATENTSCHRIFT

(11) **EP 4 324 695 B1**
(45) Veröffentlichungstag und Bekanntmachung des Hinweises auf die Patenterteilung: **04.03.2026**
(21) Anmeldenummer: 23192300.4
(22) Anmeldetag: 19.08.2023
(51) Int. Cl.: B60P 3/36, B60R 15/02, E03C 1/01

(54) **FREIZEITFAHRZEUG MIT EINER NASSZELLE UND EINER ANORDNUNG MIT EINER WAND FÜR DIE NASSZELLE**
RECREATIONAL VEHICLE COMPRISING A WET CELL AND AN ASSEMBLY COMPRISING A WALL FOR THE WET CELL
VÉHICULE DE LOISIR AVEC UNE CUVE HUMIDE ET UN DISPOSITIF AVEC UNE PAROI POUR LA CUVE HUMIDE

(30) Priorität: 19.08.2022 DE 102022121093
(43) Veröffentlichungstag der Anmeldung: 21.02.2024
(73) Patentinhaber: Hymer GmbH & Co. KG, 88339 Bad Waldsee (DE)
(72) Erfinder: Steigmiller, Anton, 88444 Ummendorf (DE)
(74) Vertreter: Müller Schupfner & Partner Patent- und Rechtsanwaltspartnerschaft mbB (Muc)

(56) Entgegenhaltungen:
- EP-B1- 0 013 987
- BE-B1- 1 022 786
- DE-A1- 102007 055 049

## Beschreibung

Die Erfindung betrifft ein Freizeitfahrzeug, insbesondere ein Wohnmobil oder einen Wohnwagen, mit einer Nasszelle und einer Wand für die Nasszelle.

Aus der DE 10 2019 122 085 A1 ist eine Nasszelle für ein Campingfahrzeug bekannt. Die bekannte Nasszelle umfasst einen unbeweglichen Wandabschnitt mit einer Öffnung und einen beweglichen Wandabschnitt, wobei die Öffnung durch den beweglichen Wandabschnitt verschlossen ist. Der bewegliche Wandabschnitt ist mit einer ersten Seitenkante des unbeweglichen Wandabschnitts durch Gelenkmittel drehgelenkig verbunden. Der bewegliche Wandabschnitt ist mit einer zweiten Seitenkante des unbeweglichen Wandabschnitts durch Führungsmittel schiebebeweglich verbunden.

Aus der DE 10 2007 055049 A1 ist eine Sanitärwand mit einem an einer Wandseite angeordneten Sanitärelement und einer innerhalb der Sanitärwand angeordneten Installationsleitung bekannt. Die Sanitärwand ist mittels eines Schwenkgelenks schwenk-bar und die Installationsleitung wird im Bereich des Schwenkgelenks in die Sanitärwand eingeführt.

BE 1 022 786 B1 beschreibt eine anpassbare Sanitäreinrichtung, wobei eine der aufrecht stehenden Wände eine Scharniertür enthält und wobei eine andere aufrecht stehende Wand eine Wand ist, die einen drehbaren Abschnitt aufweist, der sich um seine vertikale Mittelachse drehen kann und wobei der drehbare Abschnitt auf einer Seite mit einer Toilette und auf der anderen Seite mit einem Waschbecken versehen ist.

EP 0 013 987 B1 beschreibt ein Wandelement für einen Nassraum mit hinter einer Wandschale angeordneten und an dieser befestigten Ver- und Entsorgungs-leitungen. Dabei sind decken- und bodenseitig begrenzende Kanäle für horizontale Leitungen vorgesehen, die zur Montage raumseitig offen und mit Deckplatten verschließbar sind.

Aufgabe der Erfindung ist es, eine Anordnung für ein Freizeitfahrzeug, insbesondere ein Wohnmobil oder einen Wohnwagen, eine Nasszelle für ein Freizeitfahrzeug und ein Freizeitfahrzeug mit zumindest einer Nasszelle anzugeben, die eine verbesserte Ausgestaltung und Funktionsweise ermöglichen.

Die Aufgabe wird durch eine Anordnung für ein Freizeitfahrzeug mit den Merkmalen des unabhängigen Patentanspruchs 1, durch eine Nasszelle mit den Merkmalen des Patentanspruchs 7 und durch ein Freizeitfahrzeug mit den Merkmalen des Patentanspruchs 8 gelöst. Vorteilhafte Weiterbildungen der Erfindung sind in den Unteransprüchen angegeben.

Die Aufgabe wird durch eine Anordnung für ein Freizeitfahrzeug, insbesondere ein Wohnmobil oder einen Wohnwagen, mit einer Wand, die für eine Nasszelle dient, gelöst, wobei die Wand einen mehrlagigen Aufbau mit einer ersten festen Drehlage, einer zweiten festen Drehlage und zumindest einer zwischen der ersten festen Drehlage und der zweiten festen Drehlage angeordnete Zwischenlage aufweist, wobei an zumindest einer Decklage zumindest ein Leitungsausgang ausgestaltet ist, wobei an einer Stirnseite der Wand zumindest ein Leitungsausgang an der zumindest einen Zwischenlage ausgestaltet ist und wobei die zumindest eine Zwischenlage von dem zumindest einen Leitungsausgang der Decklage zu dem zumindest einen Leitungsausgang an der Stirnseite der Wand so ausgespart ist, dass zumindest eine Fluidleitung durch zumindest die Wand verlegbar ist.

Die Fluidleitung kann hierbei auch abschnittsweise an einer oder beiden Seiten aus der Wand herausgeführt sein.

Ferner wird die Aufgabe durch eine Nasszelle für ein Freizeitfahrzeug, insbesondere ein Wohnmobil oder einen Wohnwagen, mit zumindest einer solchen Anordnung gelöst. Ferner wird die Aufgabe durch ein Freizeitfahrzeug, insbesondere ein Wohnmobil oder einen Wohnwagen, mit zumindest einer solchen Nasszelle gelöst.

Vorteilhaft ist es, dass zumindest eine als Flüssigkeitsleitung ausgebildete Fluidleitung vorgesehen ist, die an der Stirnseite der Wand aus der zumindest einen Zwischenlage heraus und zumindest abschnittsweise entlang der Stirnseite geführt ist. Speziell kann hierdurch eine Führung von Frischwasser oder Brauchwasser erfolgen. Hierbei können Anschlussstellen eingespart werden.

In vorteilhafter Weise ist die Wand als Schwenkwand ausgebildet, die um eine Schwenkachse schwenkbar ist, wobei die Stirnseite der Wand an der Schwenkachse angeordnet ist. Hierdurch kann in vorteilhafter Weise eine Schwenkwand realisiert werden, wobei bei einer bevorzugten Ausgestaltung die Fluidleitungen abschnittsweise entlang der Schwenkachse geführt sind.

Vorteilhaft ist es, dass zumindest ein Waschbecken vorgesehen ist, das an einer der festen Decklagen montiert ist, und dass das Waschbecken zumindest mittelbar mit der zumindest einen Fluidleitung verbunden ist. Auf diese Weise kann ein Waschbecken an der Wand vorgesehen sein. Das Waschbecken kann hierbei klein dimensioniert sein, da die Fluidleitungen durch die Wand geführt sind und somit an der benötigten Stelle, also an dem Waschbecken, aus der betreffenden Decklage austreten können. Dadurch ergeben sich große konstruktive Freiheiten.

Vorteilhaft ist es, dass die zumindest eine Fluidleitung als Warmwasserleitung und/oder Kaltwasserleitung und/oder Abwasserleitung ausgebildet ist. Speziell können für ein Waschbecken eine Kaltwasserleitung und gegebenenfalls eine Warmwasserleitung sowie eine Abwasserleitung vorgesehen sein. Die Leitungen werden hierbei nicht auf den Decklagen der Wand verlegt. Dadurch kann die Wand so genutzt werden, dass beide Decklagen Sichtseiten der Wand darstellen.

Der Begriff der Wand ist hierbei breit zu verstehen und umfasst insbesondere einen Einsatz der Wand als Tür oder Duschabtrennung.

Vorteilhaft ist es, dass die zumindest eine Zwischenlage aus einem leichten Werkstoff, insbesondere Styropor, ausgebildet ist. Hierdurch ist in besonders einfacher Weise eine Aussparung realisierbar. Ferner ergibt sich eine Leichtbauweise, die gewichtssparend ist.

Erfindungsgemäß ist es, dass zumindest zwei Scharnierprofile vorgesehen sind, und dass die Scharnierprofile jeweils zumindest im Wesentlichen aus zwei Halbschalen gebildet sind. Hierdurch kann eine einfache Montierbarkeit und Demontierbarkeit erzielt werden, um beispielsweise im Rahmen von Wartungsarbeiten die Wand auszubauen und Reinigungsvorgänge durchzuführen.

Erfindungsgemäß ist es, dass der zumindest eine Leitungsausgang an der Stirnseite zwischen zumindest zwei Scharnierprofilen angeordnet ist. Hierdurch wird eine hohe Stabilität der Anordnung erreicht.

Je nach Ausgestaltung können ein oder mehrere Zwischenlagen vorgesehen sein. Insbesondere kann eine einzige Mittellage vorgesehen sein. Die zumindest eine Zwischenlage ist in vorteilhafter Weise partiell für die Installationsverlegung ausgespart. Speziell kann ein Waschbecken dadurch beliebig auf der Wand positioniert werden.

Durch ein seitliches Zuführen der Installation an der Stirnseite kann diese in eine isolierte Hülle des Freizeitfahrzeugs weitergeführt werden. Dadurch kann eine Wintertauglichkeit realisiert werden. Außerdem kann eine gute Zugänglichkeit zur Installation für eine Montage und einen Kundendienst erzielt werden.

Weitere Vorteile und Einzelheiten der Erfindung werden anhand der in den schematischen Figuren dargestellten Ausführungsbeispiele näher erläutert. Hierbei zeigen:
- Fig. 1: eine schematische, auszugsweise Darstellung eines Freizeitfahrzeugs mit einer Nasszelle entsprechend einem ersten Ausführungsbeispiel, wobei die Nasszelle schematisch von oben dargestellt ist, wenn diese nicht benutzt wird;
- Fig. 2: die in Fig. 1 dargestellte Nasszelle, wobei eine mögliche Benutzung veranschaulicht ist;
- Fig. 3: eine stark vereinfachte und schematische Darstellung einer Wand während einer Montage;
- Fig. 4: die Wand, wobei Scharniere montiert sind;
- Fig. 5: die Wand, wobei Fluidleitungen entlang einer Schwenkachse durch ein Scharnier geführt sind;
- Fig. 6: eine schematische, auszugsweise, räumliche Darstellung eines Freizeitfahrzeugs mit einer Nasszelle, wobei eine Ansicht von schräg oben dargestellt ist;
- Fig. 7: das in Fig. 6 dargestellte Freizeitfahrzeug mit der Nasszelle, wobei eine als Schwenkwand ausgebildete Wand in eine Duschstellung geschwenkt ist; und
- Fig. 8: eine schematische Darstellung eines Scharnierprofils im Querschnitt.

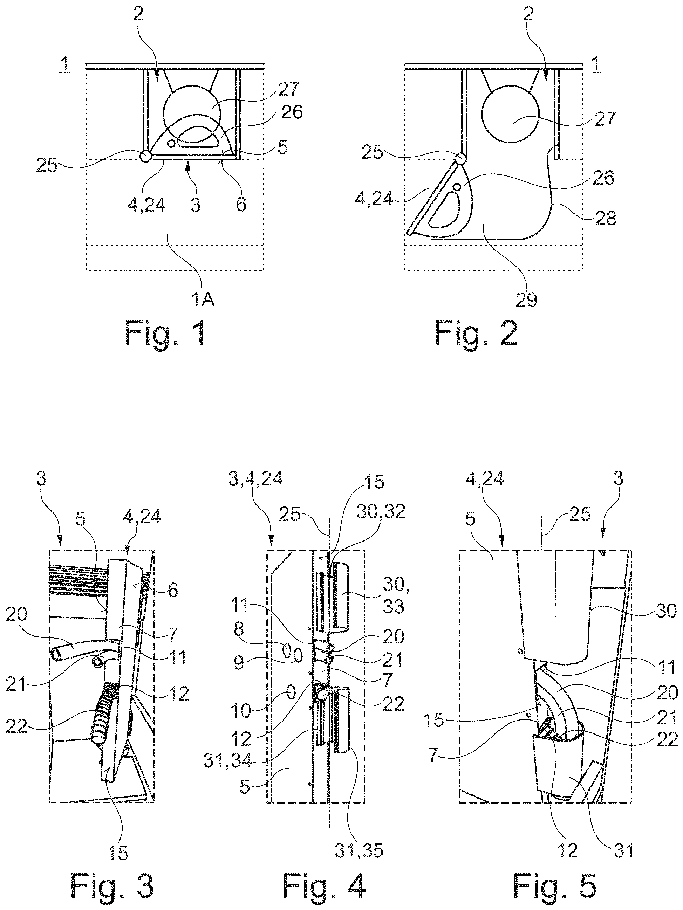

Fig. 1 zeigt ein Freizeitfahrzeug 1 mit einer Nasszelle 2 in einer schematischen Darstellung entsprechend einem ersten Ausführungsbeispiel, wobei eine Ansicht von oben dargestellt ist. Ferner zeigt Fig. 2 das in Fig. 1 gezeigte Ausführungsbeispiel, wobei eine mögliche Nutzung der Nasszelle 2 veranschaulicht ist. Das Freizeitfahrzeug 1 kann insbesondere als Wohnmobil oder Wohnwagen ausgebildet sein.

Die in Fig. 1 und 2 dargestellte Ausgestaltung des ersten Ausführungsbeispiels eignet sich besonders, aber nicht ausschließlich für kleine Freizeitfahrzeuge 1. Speziell können sehr kleine Nasszellen 2 realisiert werden. Vor der Nasszelle 2 kann beispielsweise ein Laufboden 1A des Freizeitfahrzeugs 1 vorgesehen sein, insbesondere kann ein Flur vor der Nasszelle 2 vorgesehen sein.

Das Freizeitfahrzeug 1 weist eine Anordnung 3 mit einer Wand 4 auf, die als Schwenkwand 24 ausgestaltet ist. In Fig. 1 ist die Wand 4 geschlossen. In Fig. 2 ist die Wand 4 geöffnet dargestellt.

Im Folgenden wird die Ausgestaltung der Wand 4 auch unter Bezugnahme auf die Fig. 3 bis 5 näher beschrieben. Fig. 3 bis 5 zeigen hierbei die Wand 4 in einer stark vereinfachten, schematischen Darstellung während einer stark vereinfacht veranschaulichten Montage. Die Wand 4 weist einen mehrlagigen Aufbau mit einer ersten festen Decklage 5 und einer zweiten festen Decklage 6 auf. Ferner weist der mehrlagige Aufbau zumindest eine Zwischenlage 7 auf, die zwischen der ersten festen Decklage 5 und der zweiten festen Decklage 6 vorgesehen ist. Beispielsweise kann auch eine einzige Zwischenlage 7 vorgesehen sein, die als Mittellage 7 dient.

In diesem Ausführungsbeispiel sind an der ersten Decklage fünf Leitungsausgänge 8, 9, 10 ausgestaltet. Ferner ist an einer Stirnseite 15 der Wand 4 ein Leitungsausgang 11 ausgestaltet, der den Leitungsausgängen 8, 9 an der Decklage 5 zugeordnet ist. Außerdem ist an der Stirnseite 15 der Wand 4 ein Leitungsausgang 12 ausgestaltet, der dem Leitungsausgang 10 der Decklage 5 zugeordnet ist. Die Leitungsausgänge 11, 12 sind an der Zwischenlage 7 ausgestaltet. Hierbei ist es allerdings möglich, dass an der Stirnseite 15 eine zusätzliche Verkleidung vorgesehen ist.

Die Zwischenlage 7 ist so ausgestaltet, dass zum einen von den Leitungsausgängen 8, 9 der Decklage 5 zu dem Leitungsausgang 11 an der Stirnseite 15 und zum anderen von dem Leitungsausgang 10 an der Decklage 5 zu dem Leitungsausgang 12 an der Stirnseite 15 Aussparungen vorgesehen sind, um Fluidleitungen 20, 21, 22 zu verlegen. Die Fluidleitungen 20, 21, 22 sind dann zumindest abschnittsweise durch die Wand 4 geführt. Je nach Ausgestaltung können die Fluidleitungen 20, 21, 22 abschnittsweise an den Leitungsausgängen 8, 9, 10 der Decklage 5 und/oder an den Leitungsausgängen 11, 12 der Stirnseite 15 herausgeführt sein, wie es in den Fig. 3 bis 5 veranschaulicht ist.

In diesem Ausführungsbeispiel dienen die Fluidleitungen 20, 21, 22 als Flüssigkeitsleitungen 20, 21, 22. Speziell können die Fluidleitungen 20, 21 für Warmwasser und Kaltwasser dienen. Die Fluidleitung 22 kann als Abführleitung beziehungsweise Brauchwasserleitung dienen.

Wie in Fig. 5 veranschaulicht ist, können die Fluidleitungen 20, 21, 22 entlang der Stirnseite 15 geführt sein. In diesem Ausführungsbeispiel sind die Fluidleitungen 20, 21, 22 von den jeweiligen Leitungsausgängen 11, 12 aus nach unten entlang der Stirnseite 15 geführt.

Da die Wand 4 als Schwenkwand 24 ausgebildet ist, können die Fluidleitungen 20, 21, 22 in vorteilhafter Weise entlang der Schwenkachse 25 der Schwenkwand 24 geführt sein.

Wie in Fig. 1 und 2 dargestellt ist, ist an der Decklage 5 der Wand 4 ein Waschbecken 26 montiert. Über die Fluidleitungen 20, 21, 22 kann das Waschbecken 26 angeschlossen werden. Somit können an dem Waschbecken 26 insbesondere Warm- und Kaltwasser genutzt werden, wobei das Brauchwasser abgeführt wird.

Bei der in Fig. 1 gezeigten Stellung der Wand 4 ist das Waschbecken 26 über ein Toilettenbecken 27 geschwenkt. Auf diese Weise kann die Nasszelle 2 sehr klein ausgestaltet werden. Zur Benutzung des Waschbeckens 26 oder des Toilettenbeckens 27 wird die Schwenkwand 24 beispielsweise in die in Fig. 2 veranschaulichte Position geschwenkt. Hierbei kann eine Abtrennung 28 aufgespannt werden. Die Abtrennung 28 kann als Vorhang oder Faltwand ausgestaltet sein. Hierbei kann zusätzlich ein Duschbereich 29 geschaffen werden, so dass die Nasszelle 2 gegebenenfalls auch als Dusche genutzt werden kann. Die Abtrennung 28 kann dann als Duschabtrennung dienen.

Wie es anhand der Fig. 4, 5 und 8 veranschaulicht ist, sind an der Stirnseite 15 Scharnierprofile 30, 31 vorgesehen, die jeweils zwei Halbschalen 32, 33, 34, 35 aufweisen. Die Halbschalen 32, 33 sowie die Halbschalen 34, 35 der Scharnierprofile 30, 31 können beispielsweise durch einen Clipsmechanismus verschlossen werden. Dies ermöglicht eine einfache Montage und Demontage.

Wie in Fig. 5 dargestellt ist, können die Fluidleitungen 20, 21, 22 beispielsweise durch das Scharnierprofil 31 geführt sein.

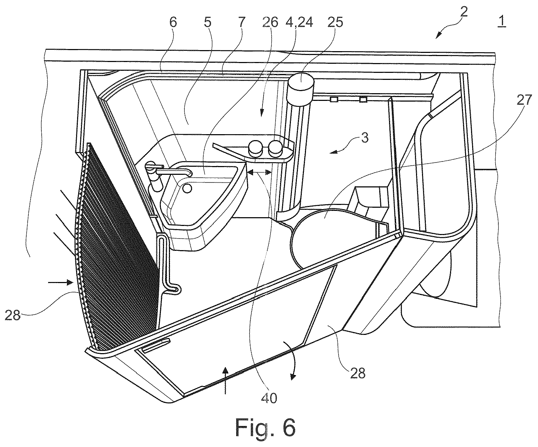

Fig. 6 zeigt das Freizeitfahrzeug 1 in einer auszugsweisen Darstellung, wobei eine Nasszelle 2 in einer Ansicht von schräg oben dargestellt ist. Hierbei ist das Waschbecken 26 mit einem Abstand 40 beabstandet zu der Schwenkachse 25 an der Wand 4 angeordnet. Dies ist möglich, da die Fluidleitungen 20, 21, 22 durch die Wand 4 zu der Schwenkachse 25 geführt sind. In der dargestellten Schwenkstellung der Wand 4 ist die erste feste Decklage 5 sichtbar. Die Fluidleitungen 20, 21, 22 sind nicht sichtbar, da sie durch die Zwischenlage 7 der Wand 4 geführt sind.

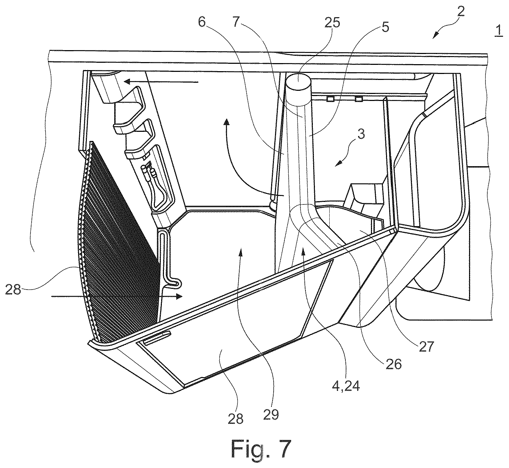

Fig. 7 zeigt das in Fig. 6 dargestellte Freizeitfahrzeug 1 entsprechend dem zweiten Ausführungsbeispiel, wobei die Wand 4 in eine Duschstellung geschwenkt ist. Beim Duschen ist die zweite feste Decklage 6 sichtbar. Die Fluidleitungen 20, 21, 22 sind hierbei nicht sichtbar, da sie durch die Wand 4 verlegt sind.

Außerdem ist in den Fig. 6 und 7 schematisch der mehrlagige Aufbau der Wand 4 aus der ersten Decklage 5, der zweiten Decklage 6 und der Zwischenlage 7 veranschaulicht.

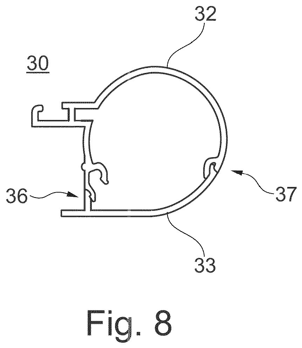

Fig. 8 zeigt eine schematische Darstellung des Scharnierprofils 30 entsprechend einer möglichen Ausgestaltung. Das Scharnierprofil 30 weist die Halbschalen 32, 33 auf. In diesem Ausführungsbeispiel kann das Scharnierprofil 30 an Stellen 36, 37 zusammengesetzt werden. Hierbei kann die Halbschale 33 an den Stellen 36, 37 in die Halbschale 32 eingeclipst werden. Zum Öffnen kann die Halbschale 33 gegebenenfalls nur an einer Stelle 36, 37, insbesondere an der Stelle 36, von der Halbschale 32 gelöst werden, wie es in der Fig. 4 veranschaulicht ist.

Die Erfindung ist nicht auf die beschriebenen Ausführungsformen beschränkt.

## Patentansprüche

1. Anordnung (3) für ein Freizeitfahrzeug (1), insbesondere ein Wohnmobil oder einen Wohnwagen, mit einer Wand (4), die für eine Nasszelle (2) dient,
wobei die Wand (4) einen mehrlagigen Aufbau mit einer ersten festen Decklage (5), einer zweiten festen Decklage (6) und zumindest einer zwischen der ersten festen Decklage (5) und der zweiten festen Decklage (6) angeordneten Zwischenlage (7) aufweist, wobei an zumindest einer Decklage (5, 6) zumindest ein Leitungsausgang (8, 9, 10) ausgestaltet ist, wobei an einer Stirnseite (15) der Wand (4) zumindest ein Leitungsausgang (11, 12) an der zumindest einen Zwischenlage (7) ausgestaltet ist und wobei die zumindest eine Zwischenlage (7) von dem zumindest einen Leitungsausgang (8, 9, 10) der Decklage (5, 6) zu dem zumindest einen Leitungsausgang (11, 12) an der Stirnseite (15) der Wand (4) so ausgespart ist, dass zumindest eine Fluidleitung (20, 21, 22) durch zumindest die Wand (4) verlegbar ist,
**dadurch gekennzeichnet,**
**dass** zumindest zwei Scharnierprofile (30, 31) vorgesehen sind, die an der Stirnseite (15) der Wand (4) angeordnet sind, und dass die Scharnierprofile (30, 31) jeweils zumindest im Wesentlichen aus zwei Halbschalen (32, 33, 34, 35) gebildet sind
und **dass** der zumindest eine Leitungsausgang (11, 12) an der Stirnseite (15) zumindest im Wesentlichen zwischen zumindest zwei Scharnierprofilen (30, 31) angeordnet ist.

2. Anordnung nach Anspruch 1,
**dadurch gekennzeichnet,**
**dass** zumindest eine als Flüssigkeitsleitung (20, 21, 22) ausgebildete Fluidleitung (20, 21, 22) vorgesehen ist, die an der Stirnseite (15) der Wand (4) aus der zumindest einen Zwischenlage (7) heraus und zumindest abschnittsweise entlang der Stirnseite (15) geführt ist.

3. Anordnung nach Anspruch 1 oder 2,
**dadurch gekennzeichnet,**
**dass** die Wand (4) als Schwenkwand (24) ausgebildet ist, die um eine Schwenkachse (25) schwenkbar ist, und dass die Stirnseite (15) der Wand (4) an der Schwenkachse (25) angeordnet ist.

4. Anordnung nach einem der Ansprüche 1 bis 3,
**dadurch gekennzeichnet,**
**dass** zumindest ein Waschbecken (26) vorgesehen ist, das an einer der festen Decklagen (5, 6) montiert ist, und dass das Waschbecken (26) zumindest mittelbar mit der zumindest einen Fluidleitung (20, 21, 22) verbunden ist.

5. Anordnung nach einem der Ansprüche 1 bis 4,
**dadurch gekennzeichnet,**
**dass** die zumindest eine Fluidleitung (20, 21, 22) als Warmwasserleitung und/oder Kaltwasserleitung und/oder Abwasserleitung ausgebildet ist.

6. Anordnung nach einem der Ansprüche 1 bis 5,
**dadurch gekennzeichnet,**
**dass** die zumindest eine Zwischenlage (7) aus einem leichten Werkstoff, insbesondere Styropor, ausgebildet ist.

7. Nasszelle (2) für ein Freizeitfahrzeug (1), insbesondere ein Wohnmobil oder einen Wohnwagen, mit zumindest einer Anordnung (3) nach einem der Ansprüche 1 bis 6.

8. Freizeitfahrzeug (1), insbesondere Wohnmobil oder Wohnwagen, mit zumindest einer Nasszelle (2) nach Anspruch 7.

## Claims

1. An arrangement (3) for a recreational vehicle (1), in particular a motor home or caravan, with a wall (4) that serves as a wet room (2), wherein the wall (4) has a multi-layer structure with a first solid top layer (5), a second solid top layer (6) and at least one interply (7) arranged between the first solid top layer (5) and the second solid top layer (6), wherein at least one line output (8, 9, 10) is formed on at least one top layer (5, 6), wherein at least one line output (11, 12) is formed on the at least one interply (7) on a front side (15) of the wall (4), and wherein the at least one interply (7) is recessed from the at least one line output (8, 9, 10) of the top layer (5, 6) to the at least one line output (11, 12) on the front side (15) of the wall (4) in such a way that at least one fluid line (20, 21, 22) can be laid through at least the wall (4),
**characterised in that**
at least two hinge profiles (30, 31) are provided, which are arranged on the front side (15) of the wall (4), and that the hinge profiles (30, 31) are each formed at least essentially from two half shells (32, 33, 34, 35) and that the at least one line output (11, 12) is arranged on the front side (15) at least substantially between at least two hinge profiles (30, 31).

2. The arrangement according to claim 1,
**characterised in that**
at least one fluid line (20, 21, 22) designed as a liquid line (20, 21, 22) 22) is provided, which is guided out of the at least one interply (7) at the front side (15) of the wall (4) and at least in sections along the front side (15).

3. The arrangement according to claim 1 or 2,
**characterised in that**
the wall (4) is designed as a pivot wall (24) which can pivot about a pivot axis (25), and **in that** the front side (15) of the wall (4) is arranged at the pivot axis (25).

4. The arrangement according to one of claims 1 to 3,
**characterised in that**
at least one sink (26) is provided, which is mounted on one of the fixed top layers (5, 6), and **in that** the sink (26) is connected at least indirectly to the at least one fluid line (20, 21, 22).

5. The arrangement according to one of claims 1 to 4,
**characterised in that**
the at least one fluid line (20, 21, 22) is designed as a hot water pipe and/or cold water pipe and/or sewage pipe.

6. The arrangement according to one of claims 1 to 5,
**characterised in that**
the at least one interply (7) is made of a lightweight material, in particular polystyrene.

7. A wet room (2) for a recreational vehicle (1), in particular a motor home or caravan, with at least one arrangement (3) according to one of claims 1 to 6.

8. A recreational vehicle (1), in particular a motor home or caravan, with at least one wet room (2) according to claim 7.

## Revendications

1. Agencement (3) destiné à un véhicule de loisirs (1), en particulier un camping-car ou une caravane, comprenant une paroi (4) qui sert à un cabinet de toilette (2), dans lequel la paroi (4) présente une structure en plusieurs couches comprenant une première couche de couverture solide (5), une deuxième couche de couverture solide (6) et au moins une couche intermédiaire (7) agencée entre la première couche de couverture solide (5) et la seconde couche de couverture solide (6), dans lequel il est réalisé, au niveau d'au moins une couche de couverture (5, 6), au moins une sortie de conduite (8, 9, 10), dans lequel il est réalisé, au niveau d'un côté avant (15) de la paroi (4), au moins une sortie de conduite (11, 12) au niveau de ladite au moins une couche intermédiaire (7), et dans lequel ladite au moins une couche intermédiaire (7) est évidée, depuis ladite au moins une sortie de conduite (8, 9, 10) de la couche de couverture (5, 6) jusqu'à ladite au moins une sortie de conduite (11, 12) au niveau du côté avant de la paroi (4), de telle sorte qu'au moins une conduite de fluide (20, 21, 22) peut être posée à travers au moins la paroi (4),
**caractérisé en ce que**
il est prévu au moins deux profilés à charnière (30, 31) qui sont agencés au niveau du côté avant (15) de la paroi (4), et les profilés à charnière (30, 31) sont formés chacun au moins sensiblement de deux demi-coques (32, 33, 34, 35), et
**en ce que** ladite au moins une sortie de conduite (11,12), au niveau du côté avant (15), est agencée au moins sensiblement entre au moins deux profilés à charnière (30, 31).

2. Agencement selon la revendication 1,
**caractérisé en ce que**
il est prévu au moins une conduite de fluide (20, 21, 22) réalisée sous forme de conduite de liquide (20, 21, 22) qui est guidée au niveau du côté avant (15) de la paroi (4) hors de ladite au moins une couche intermédiaire (7) et au moins localement le long du côté avant (15).

3. Agencement selon la revendication 1 ou 2,
**caractérisé en ce que**
la paroi (4) est réalisée sous forme de paroi pivotante (24) qui peut pivoter autour d'un axe de pivotement (25), et **en ce que** le côté avant (15) de la paroi (4) est agencé au niveau de l'axe de pivotement (25).

4. Agencement selon l'une des revendications 1 à 3,
**caractérisé en ce que**
il est prévu au moins un lavabo (26) qui est monté au niveau de l'une des couches de couverture solides (5, 6), et **en ce que** le lavabo (26) est relié au moins de manière indirecte à ladite au moins une conduite de fluide (20, 21, 22).

5. Agencement selon l'une des revendications 1 à 4,
**caractérisé en ce que**
ladite au moins une conduite de fluide (20, 21, 22) est réalisée sous forme de conduite d'eau chaude et/ou de conduite d'eau froide et/ou de conduite d'eau usée.

6. Agencement selon l'une des revendications 1 à 5,
**caractérisé en ce que**
ladite au moins une couche intermédiaire (7) est réalisée en un matériau léger, en particulier en polystyrène.

7. Cabinet de toilette (2) destiné à un véhicule de loisirs (1), en particulier un camping-car ou une caravane, comprenant au moins un agencement (3) selon l'une des revendications 1 à 6.

8. Véhicule de loisirs (1), en particulier camping-car ou caravane, comprenant au moins un cabinet de toilette (2) selon la revendication 7.
